# EUROPÄISCHE PATENTSCHRIFT

(11) **EP 3 098 066 B1**
(45) Veröffentlichungstag und Bekanntmachung des Hinweises auf die Patenterteilung: **08.07.2020**
(21) Anmeldenummer: 16153734.5
(22) Anmeldetag: 02.02.2016
(51) Int. Cl.: B29D 30/66, B23Q 7/10

(54) **VORRICHTUNG MIT EINER SPIKEPISTOLE**
DEVICE WITH A SPIKE PISTOL
DISPOSITIF COMPRENANT UN PISTOLET SPIKE

(30) Priorität: 28.05.2015 DE 102015209840
(43) Veröffentlichungstag der Anmeldung: 30.11.2016
(73) Patentinhaber: Continental Reifen Deutschland GmbH, 30165 Hannover (DE)
(72) Erfinder: Koch, Tim, 30171 Hannover (DE); Berger, Markus, 31319 Sehnde (DE)
(74) Vertreter: Widjaja, Wira

(56) Entgegenhaltungen:
- DE-A1- 1 778 978
- DE-A1- 2 926 518
- US-A- 3 398 446
- US-A- 3 475 806
- US-A- 3 553 816

## Beschreibung

Die Erfindung betrifft eine Vorrichtung mit einer Spike-Setzpistole zum Bespiken von Laufstreifen von Fahrzeugluftreifen mit einer Spike-Setzeinrichtung, welche einen Setzbolzen aufweist, und mit einer Zuführeinrichtung mit einem Zuführrohr oder -schlauch zum Zuführen der Spikes zu einem Pistolenkopf, wobei die Zuführeinrichtung eine Vereinzelungseinrichtung mit zwei übereinander in einem definierten Abstand zueinander angeordneten Stoppeinrichtungen zum Separieren bzw. Vereinzeln von Spikes aufweist.

Eine Spike-Setzpistole der eingangs genannten Art mit einer zwei Stoppeinrichtungen aufweisenden Vereinzelungseinrichtung ist beispielsweise aus der DE 1 778 978 A1 bekannt. Die US 3 553 816 A offenbart eine Spike-Setzpistole mit einem Vorratsbehälter, aus welchem mittels Druckluft über ein Zuführrohr Spikes zu einem Pistolenkopf transportierbar sind. Aus der DE 29 26 518 A1 ist eine Vorrichtung zur Überwachung und Steigerung der Leistung von Maschinen zur Herstellung von Massenteilen, wie Schrauben Muttern, Nieten, Stiften und dergleichen, bekannt. Die Vorrichtung weist eine Vereinzelungseinrichtung und ein von einer Lichtschranke überwachtes Zuführrohr auf.

Es ist üblich, zum Bespiken von Reifen die Spikes mit einer Spike-Setzpistole in vorvulkanisierte Vertiefungen der Laufstreifen von Fahrzeugluftreifen einzubringen. Beim Laden der Spike-Setzpistole werden die bereits ausgerichteten Spikes nacheinander und einzeln in den Pistolenkopf transportiert. Die gängigen Spike-Setzpistolen zum Bespiken von Laufstreifen erhalten die Spikes aus einem mit Spikes gefüllten Vorratsbehälter und weisen eine Vereinzelungseinrichtung zur Spikevereinzelung sowie einen Schlauch, ein Rohr oder dergleichen zum Transport der Spikes zum Pistolenkopf auf.

Bei den bekannten Vereinzelungseinrichtungen können Fehlfunktionen dazu führen, dass nicht wie erforderlich ein Spike, sondern mehr als ein Spike, beispielsweise zwei Spikes, oder gar kein Spike separiert wird bzw. werden. Bei einer gleichzeitigen Vereinzelung bzw. Separierung mehrerer Spikes verklemmen sich diese nachfolgend im Pistolenkopf, sodass der Vorgang des Bespikens unterbrochen werden muss. Um den Betrieb der Spike-Setzpistole wieder aufnehmen zu können, müssen die verklemmten Spikes aus der Spike-Setzpistole entfernt werden, was mit einem entsprechenden Zeitaufwand verbunden ist. Ein Verklemmen von Spikes kann außerdem zu Schäden an der Spike-Setzpistole führen. Verklemmen sich die Spikes vor oder in der Vereinzelungseinrichtung, sodass ein Nachrutschen der Spikes zur Vereinzelungseinrichtung nicht stattfindet, wird kein Spike separiert, sodass die Spike-Setzpistole dementsprechend auch nicht geladen wird. Da Spike-Setzpistolen nicht erkennen, ob sie mit einem Spike beladen wurden oder nicht, führen derartige Fehlfunktionen dazu, dass im fertigen Reifen an einer oder mehreren der im Laufstreifen vorgesehenen Spikeposition(en) ein Spike fehlt. Fehlende Spikes im Laufstreifen wirken sich nachteilig auf jene Fahreigenschaften aus, welche durch die Spikes erzielt werden sollen. Deshalb werden an den betroffenen Positionen nach erfolgter Qualitätskontrolle im Allgemeinen nachträglich im Laufstreifen Spikes eingesetzt, was jedoch mit einem zusätzlichen Zeit- und Kostenaufwand verbunden ist.

Der Erfindung liegt die Aufgabe zu Grunde, eine Vorrichtung mit einer Spike-Setzpistole zum Bespiken von Laufstreifen von Fahrzeugluftreifen derart auszuführen, dass feststellbar ist, ob die Vereinzelungseinrichtung tatsächlich einen einzelnen Spike separiert hat.

Gelöst wird die gestellte Aufgabe gemäß den Merkmalen des Anspruchs 1 dadurch, dass zwischen dem Pistolenkopf und der Vereinzelungseinrichtung eine Sensoreinheit vorgesehen ist, welche zwei übereinander angeordnete Lichtschranken aufweist, deren Lichtquellen vorzugsweise parallel zueinander verlaufende Lichtstrahlen aussenden, die das Zuführrohr durchqueren und voneinander einen Abstand aufweisen, welcher geringfügig größer ist als die Höhe eines Spikes und wobei die Sensoreinheit mit einer elektronischen Auswerteeinheit verbunden ist, welche die Signale der Sensoreinheit auswertet und bei Bedarf für eine Wiederholung des Vereinzelungsvorganges sorgt oder den Vorgang des Bespikens unterbricht.

Mit einer derartigen Sensoreinheit kann besonders einfach und unmittelbar nach einer durchgeführten Spikevereinzelung festgestellt werden, ob mittels der Vereinzelungseinrichtung auch tatsächlich ein einzelner Spike abgetrennt wurde. Wird beim Vereinzelungsvorgang kein Spike abgetrennt, wird der Vorgang der Spikevereinzelung automatisch wiederholt, sodass ein etwaiges Fehlen von Spikes im Laufstreifen weitgehend verhindert oder zumindest deutlich reduziert werden kann. Der Aufwand einer etwaigen nach erfolgter Qualitätskontrolle durchzuführenden Nachplatzierung einzelner Spikes sinkt daher deutlich. Ein einzelner Spike wird zunächst von der einen Lichtschranke und anschließend von der zweiten Lichtschranke erfasst. Wird jedoch mehr als ein Spike von der Vereinzelungseinrichtung separiert, werden beide Lichtschranken nahezu gleichzeitig passiert, sodass in diesem Fall der Vorgang des Bespikens unterbrochen wird und der bzw. die überschüssigen Spike(s) entnommen werden kann bzw. können. Ein Verklemmen des Spike-Setzbolzens und ein damit verbundener Schaden an der Spike-Setzpistole können verhindert werden.

Bei einer bevorzugten Ausführungsform der Erfindung sind die Lichtquellen und die Lichtdetektoren der Lichtschranken in der Sensoreinheit derart angeordnet, dass die Lichtstrahlen das Zuführrohr bzw. den Zuführschlauch senkrecht zu seiner Erstreckung durchqueren. Diese Ausführung ist für eine besonders zuverlässige Detektion der Spikes von Vorteil.

In diesem Zusammenhang ist es ferner günstig, wenn gemäß der Erfindung die Lichtquellen der Lichtschranken farbiges Licht, insbesondere Rotlicht, oder farbiges Laserlicht, aussenden.

Die Sensoreinheit lässt in einer besonders kompakten Bauform ausführen, wenn die Lichtquellen und die Lichtdetektoren von Lichtleitern gebildet sind.

Bei einer weiteren vorteilhaften Ausführungsform der Erfindung erfasst die elektronische Auswerteeinheit auch die Zeit zwischen aufeinanderfolgenden Unterbrechungen jedes Lichtstrahls der Lichtschranken. Auf diese Weise kann festgestellt werden, ob die Vereinzelungseinrichtung mehr als einen Spike separiert hat. Ist dies der Fall, wird der Vorgang des Bespikens unterbrochen, um den bzw. die überschüssigen Spike(s) der Spike-Setzpistole zu entnehmen.

Weitere Merkmale, Vorteile und Einzelheiten der Erfindung werden nun anhand der Zeichnung, die schematisch zwei Ausführungsbeispiele der Erfindung darstellt, näher beschrieben. Dabei zeigt
Fig. 1 eine Ansicht einer Spike-Setzpistole,
Fig. 2 einen Querschnitt entlang der Linie II-II aus Fig. 1 im Bereich einer Sensoreinheit und
Fig. 3 einen Längsschnitt einer alternativen Ausführungsvariante einer Sensoreinheit.

Die Erfindung befasst sich mit einer Spike-Setzpistole zum Bespiken von Laufstreifen von Fahrzeugluftreifen, welche eine Vereinzelungseinrichtung zum Zuführung einzelner Spikes (Spikevereinzelung) aus einem mit Spikes gefüllten Vorratsbehälter zum Pistolenkopf aufweist. Die erfindungsgemäße Spike-Setzpistole ist mit einer speziellen Sensoreinheit zur Überwachung der Funktion der Vereinzelungseinrichtung ausgestattet.

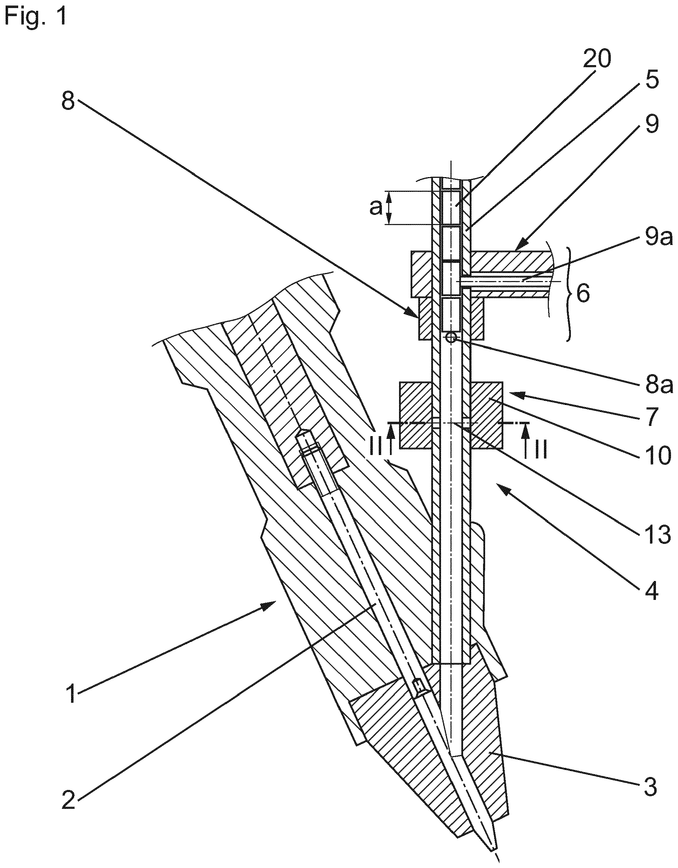

In Fig. 1 ist eine Spike-Setzpistole 1 mit einem beispielsweise pneumatisch betriebenen Spike-Setzbolzen 2, einem Pistolenkopf 3 sowie einer in den Pistolenkopf 3 mündenden Zuführeinrichtung 4 dargestellt.

Die Zuführeinrichtung 4 weist ein Spikezuführrohr 5 oder einen Zuführschlauch, eine Vereinzelungseinrichtung 6 und eine Sensoreinheit 7 auf. Im Spikezuführrohr 5 gelangen die Spikes von einem nicht dargestellten Spikevorratsbehälter, welcher beispielsweise ein in an sich bekannter Weise ausgeführter Vibrationswendelförderer ist, in den Pistolenkopf 3. Die Sensoreinheit 7 ist zwischen der Vereinzelungseinrichtung 6 und dem Pistolenkopf 3 außen am Spikezuführrohr 5 positioniert und kann in an sich bekannter Weise mittels eines nicht gezeigten Schnellverschlussmechanismus am Spikezuführrohr 5 angebracht sein.

Wie an sich bekannt, weist die Vereinzelungseinrichtung 6 eine erste, zum Pistolenkopf 3 näher befindliche, in Fig. 1 untere Stoppeinrichtung 8 und eine zweite, vom Pistolenkopf 3 weiter entfernt befindliche, in Fig. 1 obere Stoppeinrichtung 9 auf. Die beiden Stoppeinrichtungen 8, 9 weisen insbesondere ein pneumatisch oder elektrisch betriebenes unteres Stoppelement 8a bzw. oberes Stoppelemente 9a auf, die beispielsweise metallische Stifte, Bolzen oder dergleichen sind, welche in das Spikezuführrohr 5 hinein und aus diesem heraus bewegbar sind. Dabei sind die beiden Stoppeinrichtungen 8, 9 derart hintereinander am Spikezuführrohr 5 angeordnet, dass bei in das Spikezuführrohr 5 eingefahrenen Stoppelementen 8a, 9a der zwischen ihnen befindliche Freiraum geringfügig größer ist als die Höhe a eines Spikes 20. In Fig. 1 sind oberhalb des unteren Stoppelementes 8a einige Spikes 20 schematisch angedeutet.

Zur Spikevereinzelung wird das untere Stoppelement 8a ausgefahren, daher in das Spikezuführrohr 5 hineinbewegt und das Spikezuführrohr 5 anschließend mit Spikes 20 gefüllt, sodass sich oberhalb des Stoppelementes 8a übereinander Spikes 20 ansammeln. Nachfolgend wird das obere Stoppelement 9a ausgefahren und klemmt den dort im Spikezuführrohr 5 befindlichen "zweiten" Spike 20. Sämtliche weiteren Spikes 20 befinden sich oberhalb des oberen Stoppelementes 9a. Nach Lösen des unteren Stoppelementes 8a passiert der von diesem vorher gehaltene Spike 20 die Sensoreinheit 7 und wird anschließend zum Pistolenkopf 3 weitertransportiert, sodass die Spike-Setzpistole 1 geladen ist. Durch Betätigen des Spike-Setzbolzens 2 wird der Spike 20 in den Laufstreifen gesetzt. Das obere Stoppelement 9a lässt nun den nächsten Spike 20 bis zum wieder ausgefahrenen unteren Stoppelement 8a gleiten und klemmt anschließend den nächsten Spike 20. Der oben beschriebene Vorgang wird solange wiederholt, bis der Laufstreifen vollständig bespiket ist.

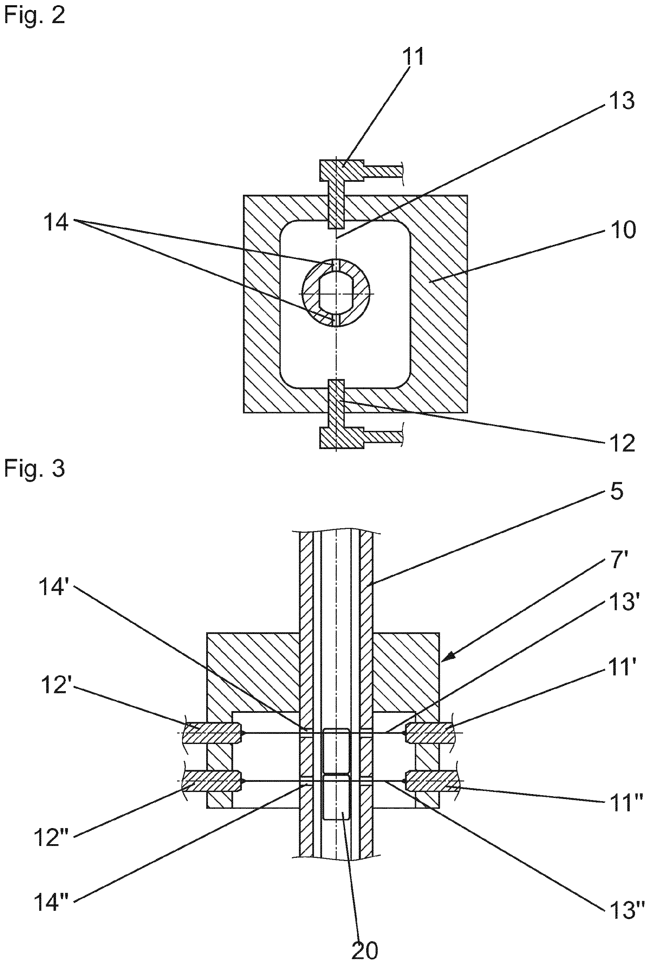

Wie Fig. 2 zeigt, weist die Sensoreinheit 7 ein das Spikezuführrohr 5 umschließendes Gehäuse 10 auf. In der Sensoreinheit 7 befindet sich eine Lichtschranke, welche durch einen Lichtstrahl 13, eine Lichtquelle 11 (Sender) und einen Lichtdetektor 12 (Empfänger) gebildet wird, auf. Die Lichtquelle 11 und der Lichtdetektor 12 können an sich bekannte Lichtleiter sein, wobei die Lichtquelle 11 vorzugsweise farbiges Licht, insbesondere Rotlicht, oder farbiges Laserlicht, aussendet. Das Spikezuführrohr 5 weist im Bereich zwischen der Lichtquelle 11 und dem Lichtdetektor 12 zwei einander gegenüberliegende Öffnungen 14, beispielsweise Bohrungen, auf, durch welche der Lichtstrahl 13 das Spikezuführrohr 5 durchquert. Vorzugsweise sind die Bohrungen 14 und die Lichtquelle 11 derart zueinander ausgerichtet, dass der Lichtstrahl 13 koaxial zu den beiden Öffnungen 14 verläuft.

Während des Betriebes der Vorrichtung sendet die Lichtquelle 11 im Wesentlichen quer zur Verlaufsrichtung des Spikezuführrohres 5 und damit im Wesentlichen quer zur Transportrichtung der Spikes 20 den Lichtstrahl 13 zum Lichtdetektor 12.

Wird die Spikevereinzelung korrekt durchgeführt, wird ein einzelner Spike 20 durch das Spikezuführrohr 5 zum Pistolenkopf 3 (Fig. 1) transportiert, sodass der Lichtstrahl 13 vom Spike 20 unterbrochen wird und daher kurzzeitig nicht auf den Lichtdetektor 12 auftrifft. Dies signalisiert, dass im Zuge der vorhergehenden Spikevereinzelung zumindest ein Spike 20 freigegeben wurde. Sollte jedoch kein Spike 20 freigegeben worden sein, wird der Lichtstrahl 13 fortlaufend vom Lichtdetektor 12 registriert und nicht unterbrochen. In diesem Fall wird der Vorgang der Spikevereinzelung vorzugsweise solange automatisch wiederholt bis die Sensoreinheit 7 einen Spike 20 detektiert, d.h. bis der Lichtstrahl 13 kurzzeitig nicht auf den Lichtdetektor 12 auftrifft.

Werden, etwa durch eine Fehlfunktion der Vereinzelungseinrichtung 6, zwei Spikes 20 auf einmal von der Vereinzelungseinrichtung 6 separiert, wird der Lichtstrahl 13, unter der Voraussetzung, dass zwischen den Spikes 20 ein vom Lichtstrahl 13 passierbarer Freiraum vorliegt, binnen kürzester Zeit zwei Mal hintereinander unterbrochen. Das Bespiken wird unterbrochen und der überschüssige Spike entfernt, sodass etwaige Schäden durch ein Verklemmen mehrerer Spikes im Bereich des Pistolenkopfes 3 verhindert werden können.

Die Sensoreinheit 7 ist mit einer elektronischen Auswerteeinheit verbunden, die nicht dargestellt ist und nicht Gegenstand der Erfindung ist. Die elektronische Auswerteeinheit kann Bestandteil der vorgesehen Anlagensteuerung sein, verarbeitet die Signale der Sensoreinheit 7 entsprechend und sorgt bei Bedarf für ein Unterbrechen des Bespikeungsvorganges oder ein ein-oder mehrmaliges Wiederholen des Vereinzelungsvorganges.

Passieren zwei oder mehr Spikes 20 derart die Vereinzelungseinrichtung 6, dass zwischen ihnen kein von der Sensoreinheit 7 erfassbarer Freiraum vorliegt, werden diese beiden Spikes 20 von der Sensoreinheit 7 als ein einziger Spike 20 detektiert. Um derart ungünstig zueinander angeordnete Spikes 20 als separate Spikes 20 zu detektieren, kann die elektronische Auswerteeinheit zusätzlich die Dauer der Unterbrechung des Lichtstrahles 13 durch den bzw. die Spike(s) 20 erfassen. Überschreitet diese Dauer ein bestimmtes Maß, wird davon ausgegangen, dass zwei oder mehr Spikes 20 separiert wurden. Auch in diesem Fall wird das Bespiken unterbrochen und es werden überschüssige Spikes 20 der Spikepistole entnommen. Damit die Detektion mehrerer Spikes 20 mittels Zeitmessung zuverlässig funktioniert, sollten die Spikes 20 die Sensoreinheit 7 mit einer im Wesentlichen konstanten Geschwindigkeit passieren.

Um den Vorgang des Bespikens weiter zu optimieren, ist bei der Erfindung eine Sensoreinheit 7' mit zwei Lichtschranken vorgesehen. Wie Fig. 3 zeigt, sind die beiden Lichtschranken übereinander angeordnet und werden jeweils von einem Lichtstrahl 13', 13" gebildet, der jeweils von einer Lichtquelle 11', 11" ausgesendet wird und auf einen Lichtdetektor 12', 12" trifft. Das Spikezuführrohr 5 weist bei dieser Ausführungsform zwei Paare von übereinander angeordneten Öffnungen 14', 14" auf, sodass die Lichtstrahlen 13', 13" durch die Öffnungen 14', 14" hindurch das Innere des Spikezuführrohres 5 queren. Vorzugsweise sind die beiden Lichtquellen 11', 11" und die beiden Detektoren 12', 12" derart angeordnet, dass die zugehörigen Lichtstrahlen 13', 13" insbesondere im Wesentlichen parallel zueinander verlaufen und voneinander einen Mindestabstand b aufweisen, welcher geringfügig größer ist als die Höhe a eines Spikes 20. Passiert ein einzelner Spike 20 die Sensoreinheit 7', unterbricht dieser zunächst den einen Lichtstrahl 13' und anschließend den anderen Lichtstrahl 13", sodass erst der eine Lichtdetektor 12' und kurz darauf der andere Lichtdetektor 12" kein Signal erhält.

Wurde jedoch mehr als ein Spike 20 von der Vereinzelungseinrichtung 6 separiert, werden, wie Fig. 3 zeigt, beide Lichtstahlen 13', 13" nahezu gleichzeitig unterbrochen, sodass in diesem Fall der Vorgang des Bespikens unterbrochen wird und der/die überschüssige(n) Spike(s) 20 entnommen wird/werden.

### Bezugsziffernliste

- 1 .......................: Spike-Setzpistole
- 2 .......................: Spike-Setzbolzen
- 3 .......................: Pistolenkopf
- 4 .......................: Zuführeinrichtung
- 5 .......................: Spikezuführrohr- oder schlauch
- 6 .......................: Vereinzelungseinrichtung
- 7, 7': Sensoreinheit
- 8, 9 ...................: Stoppeinrichtung
- 8a, 9a ...............: Stoppelement
- 10 .....................: Gehäuse
- 11, 11', 11" .....: Lichtquelle
- 12, 12', 12" .....: Lichtdetektor
- 13, 13', 13" .....: Lichtstrahl
- 14, 14', 14" .....: Öffnung
- a .......................: Höhe eines Spikes
- b .......................: Abstand

## Patentansprüche

1. Vorrichtung mit einer Spike-Setzpistole zum Bespiken von Laufstreifen von Fahrzeugluftreifen (1) mit einer Spike-Setzeinrichtung, welche einen Setzbolzen (2) aufweist, und mit einer Zuführeinrichtung (4) mit einem Zuführrohr (5) oder -schlauch zum Zuführen der Spikes (20) zu einem Pistolenkopf (3), wobei die Zuführeinrichtung (4) eine Vereinzelungseinrichtung (6) mit zwei übereinander in einem definierten Abstand zueinander angeordneten Stoppeinrichtungen (8, 9) zum Separieren bzw. Vereinzeln von Spikes (20) aufweist,
**dadurch gekennzeichnet,**
**dass** zwischen dem Pistolenkopf (3) und der Vereinzelungseinrichtung (6) eine Sensoreinheit (7, 7') vorgesehen ist, welche zwei übereinander angeordnete Lichtschranken aufweist, deren Lichtquellen (11', 11") vorzugsweise parallel zueinander verlaufende Lichtstrahlen (13', 13") aussenden, die das Zuführrohr (5) durchqueren und voneinander einen Abstand (a) aufweisen, welcher geringfügig größer ist als die Höhe eines Spikes (20) und wobei die Sensoreinheit (7, 7') mit einer elektronischen Auswerteeinheit verbunden ist, welche die Signale der Sensoreinheit (7, 7') auswertet und bei Bedarf für eine Wiederholung des Vereinzelungsvorganges sorgt oder den Vorgang des Bespikens unterbricht.

2. Vorrichtung nach Anspruch 1, **dadurch gekennzeichnet, dass** die Lichtquellen (11, 11', 11") und die Lichtdetektoren (12, 12', 12") der Lichtschranken in der Sensoreinheit (7, 7') derart positioniert sind, dass die Lichtstrahlen (13, 13', 13") das Zuführrohr (5) bzw. den Zuführschlauch senkrecht zu seiner Erstreckung durchqueren.

3. Vorrichtung nach Anspruch 1 oder 2, **dadurch gekennzeichnet, dass** die Lichtquellen (11, 11', 11") der Lichtschranken farbiges Licht, insbesondere Rotlicht, oder farbiges Laserlicht aussenden.

4. Vorrichtung nach einem der Ansprüche 1 bis 3, **dadurch gekennzeichnet, dass** die Lichtquellen (11, 11', 11") und die Lichtdetektoren (12, 12', 12") von Lichtleitern gebildet sind.

5. Vorrichtung nach einem der Ansprüche 1 bis 4, **dadurch gekennzeichnet, dass** die elektronische Auswerteeinheit die Zeit zwischen aufeinanderfolgenden Unterbrechungen jedes Lichtstrahls (13, 13', 13") erfasst.

## Claims

1. Device having a stud gun for placing studs in treads of pneumatic vehicle tyres (1), having a stud placing installation which has a placing bolt (2), and having an infeed installation (4) having an infeed tube (5) or infeed hose for feeding the studs (20) to a gun head (3), wherein the infeed installation (4) for separating or singularizing studs (20) has a singularizing installation (6) having two stop installations (8, 9) which are disposed on top of one another at a defined mutual spacing,
**characterized in that**
a sensor unit (7, 7') is provided between the pistol head (3) and the singularizing installation (6), said sensor unit (7, 7') having two light barriers disposed one above the other, the light sources (11', 11'') of which emit light beams (13' 13'') which preferably run so as to be mutually parallel and which transverse the infeed tube (5) and have a mutual spacing (a) which is slightly larger than the height of a stud (20), and wherein the sensor unit (7, 7') is connected to an electronic evaluation unit which evaluates the signals of the sensor unit (7, 7') and when required ensures a repetition of the singularizing procedure or interrupts the procedure of placing studs.

2. Device according to Claim 1, **characterized in that** the light sources (11, 11', 11'') and the light detectors (12, 12', 12'') of the light barriers are positioned in the sensor unit (7, 7') in such a manner that the light beams (13, 13', 13'') transverse the infeed tube (5), or the infeed hose, respectively, in a manner perpendicular to the extent of the latter.

3. Device according to Claim 1 or 2, **characterized in that** the light sources (11, 11', 11") of the light barriers emit coloured light, in particular red light, or coloured laser light.

4. Device according to one of Claims 1 to 3, **characterized in that** the light sources (11, 11', 11'') and the light detectors (12, 12', 12'') are formed by light conductors.

5. Device according to one of Claims 1 to 4, **characterized in that** the electronic evaluation unit detects the time between successive interruptions of each light beam (13, 13', 13'').

## Revendications

1. Dispositif, comprenant un pistolet de pose de clous pour clouter des bandes de roulement de pneumatiques de véhicule (1) à l'aide d'un dispositif de pose de clous qui présente un boulon de pose (2), et comprenant un dispositif d'alimentation (4) doté d'un tube ou tuyau d'alimentation (5) pour l'alimentation en clous (20) d'une tête de pistolet (3), dans lequel le dispositif d'alimentation (4) présente un dispositif d'isolation (6) avec deux dispositifs d'arrêt (8, 9) disposés l'un au-dessus de l'autre à une distance définie l'un de l'autre pour séparer ou isoler des clous (20),
**caractérisé en ce qu'**entre la tête de pistolet (3) et le dispositif d'isolation (6), une unité de détection (7, 7') est prévue qui présente deux barrières lumineuses disposées l'une au-dessus de l'autre, dont les sources de lumière (11', 11") émettent de préférence des rayons lumineux (13', 13") s'étendant en parallèle les uns aux autres qui passent par le tube d'alimentation (5) et présentent une distance (a) les uns par rapport aux autres qui est légèrement supérieure à la hauteur d'un clou (20), et dans lequel l'unité de détection (7, 7') est reliée à une unité d'évaluation électronique qui évalue les signaux de l'unité de détection (7, 7') et assure en cas de besoin une répétition de l'opération d'isolation ou interrompt l'opération de cloutage.

2. Dispositif selon la revendication 1, **caractérisé en ce que** les sources de lumière (11, 11', 11") et les détecteurs de lumière (12, 12', 12") des barrières lumineuses dans l'unité de détection (7, 7') sont positionnés de telle sorte que les rayons lumineux (13, 13', 13") passent par le tube d'alimentation (5) ou le tuyau d'alimentation perpendiculairement à son extension.

3. Dispositif selon la revendication 1 ou 2, **caractérisé en ce que** les sources de lumière (11, 11', 11") des barrières lumineuses émettent une lumière colorée, en particulier de la lumière rouge, ou une lumière laser colorée.

4. Dispositif selon l'une quelconque des revendications 1 à 3, **caractérisé en ce que** les sources de lumière (11, 11', 11") et les détecteurs de lumière (12, 12', 12") sont formés par des guides de lumière.

5. Dispositif selon l'une quelconque des revendications 1 à 4, **caractérisé en ce que** l'unité d'évaluation électronique détecte le temps entre des interruptions successives de chaque rayon lumineux (13, 13', 13").
